# FASCICULE DE BREVET EUROPEEN

(11) **EP 3 558 702 B1**
(45) Date de publication et mention de la délivrance du brevet: **15.10.2025**
(21) Numéro de dépôt: 17825517.0
(22) Date de dépôt: 21.12.2017
(51) Int. Cl.: B60C 1/00, C08L 23/08

(54) **COMPOSITION DE CAOUTCHOUC RENFORCÉE**
VERSTÄRKTE KAUTSCHUKZUSAMMENSETZUNG
REINFORCED RUBBER COMPOSITION

(30) Priorité: 22.12.2016 FR 1663180
(43) Date de publication de la demande: 30.10.2019
(73) Titulaire: Compagnie Générale des Etablissements Michelin, 63000 Clermont-Ferrand (FR)
(72) Inventeur: PAVAGEAU, Corentin, 63040 Clermont-Ferrand Cedex 09 (FR); SCHNELL, Benoît, 63040 Clermont-Ferrand Cedex 09 (FR); BOUILLOUX, Alain, 27300 Saint-Leger De Rotes (FR); QUINEBECHE, Sébastien, 27300 Bernay (FR)
(74) Mandataire: Casalonga
(86) Numéro de dépôt international: PCT/EP2017/083973
(87) Numéro de publication internationale: WO 2018/115220

(56) Documents cités:
- WO-A1-2016/005536

## Description

La présente invention se rapporte à des compositions de caoutchouc renforcées par une charge renforçante, notamment destinées à la fabrication de pneumatiques ou de produits semi-finis pour pneumatiques, en particulier aux bandes de roulement de ces pneumatiques.

Les compositions de caoutchoucs utilisées dans la fabrication de pneumatiques comprennent habituellement des caoutchoucs naturels ou synthétiques qui sont des élastomères diéniques comportant des doubles liaisons carbone-carbone, également appelées insaturations, dans leur chaîne principale. La présence de ces doubles liaisons rend ces élastomères sensibles notamment à la thermo-oxydation, tel que par exemple des échauffements qui surviennent lors de l'utilisation du pneumatique. Ces échauffements peuvent conduire à des modifications des propriétés des compositions de caoutchouc et notamment à changer les propriétés mécaniques de ces compositions et le comportement des articles semi-finis les contenant.

Par ailleurs, il est un objectif constant pour les industriels du pneumatique de trouver des solutions afin d'améliorer l'endurance des pneumatiques.

Une solution envisagée consisterait à remplacer partiellement les élastomères utilisés classiquement par des élastomères comportant pas ou peu de doubles liaisons dans leur chaîne principale, tels que par exemple des copolymères d'éthylène et d'acétate de vinyle (copolymères EVA).

Les copolymères EVA sont des copolymères thermoplastiques présentant un caractère élastomère. Ils sont principalement utilisés dans le domaine de l'emballage, de l'alimentaire et des adhésifs.

Dans le domaine du pneumatique, le document EP1085049A2 décrit l'utilisation de copolymères EVA en quantité minoritaire par rapport aux élastomères diéniques habituels pour améliorer l'adhérence de bandes de roulement pour pneumatiques d'hiver.

En effet, il est connu du document WO2014/042943A1 que la présence de charges renforçantes, telles que la silice ou le noir de carbone, ont un effet néfaste sur la stabilité des copolymères EVA à haute température (température d'utilisation).

Or, la présence de charges renforçantes est indispensable dans une composition de caoutchouc pour obtenir des pneumatiques ayant une bonne résistance à l'usure. Pour résoudre le problème lié à la présence de charges dans une composition comprenant des copolymères EVA, le document WO2014/042943A1 enseigne l'ajout d'un polyamide dans la composition, à un taux allant de 5 à 60 % en poids. Ces compositions présentent l'inconvénient d'être trop rigides et ne conviennent pas pour un usage pneumatique.

Par ailleurs, il est connu du document WO 2016/005536 des compositions expansées comprenant un polymère P, un acrylate A, un peroxyde, pouvant être immobilisé sur un support de carbonate de calcium et silice, et un agent gonflant. Le support ne jouant pas le rôle de charge renfor 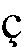 ante, des propriétés satistaisantes ne peuvent pas être obtenues pour l'application pneumatique.

Il existe donc toujours un besoin de produire des compositions ou des mélanges de caoutchoucs possédant des propriétés stables, telles que la rigidité par exemple, et cela malgré les changements (variations) thermiques subits par ces compositions ou mélanges durant leur utilisation.

Les inventeurs ont découvert de façon surprenante, et contrairement à ce qu'il était connu, que des copolymères EVA pouvaient remplacer totalement ou en partie les élastomères diéniques habituels des compositions de caoutchouc pour pneumatiques. En effet, une combinaison spécifique d'un copolymère à base d'au moins un monomère éthylène et d'au moins un monomère d'acétate de vinyle et d'un copolymère à base d'au moins un monomère d'alpha-oléfine et d'au moins un monomère fonctionnalisé, en présence de charges renforçantes inorganiques, permettait d'obtenir des compositions présentant une rigidité qui évolue peu en fonction de la température tout en conservant une résistance aux grandes déformations et un bon renforcement.

Ainsi, l'invention concerne une composition de caoutchouc à base d'au moins :
- un copolymère A avec un taux supérieur ou égal à 50 pce, ledit copolymère A étant un copolymère à base d'au moins un monomère d'éthylène et d'au moins un monomère d'acétate de vinyle,
- une charge renforçante inorganique qui se caractérise par la présence de groupes hydroxyle à sa surface, le taux de charge renforçante inorganique étant supérieur ou égal à 20 pce,
- à titre d'agent de couplage entre ledit copolymère A et ladite charge renforçante inorganique un copolymère B différent dudit copolymère A, ledit copolymère B étant un copolymère à base d'au moins un monomère d'alpha-oléfine et d'au moins un monomère fonctionnel Y,
   le monomère fonctionnel Y étant choisi parmi les monomères porteurs d'une fonction époxyde et les monomères porteurs d'une fonction acide carboxylique, le pourcentage molaire dudit monomère fonctionnel Y dans ledit copolymère B est supérieur ou égal à 0,5%, et
- un système de réticulation aux peroxydes.

Préférentiellement, dans la composition telle que définie ci-dessus, le taux molaire de monomère d'éthylène dans le copolymère A est supérieur ou égal à 51%, de préférence supérieur ou égal à 55%.

Préférentiellement, dans la composition telle que définie ci-dessus, le taux molaire de monomère d'éthylène dans le copolymère A va de 57% à 90%.

Préférentiellement, dans la composition telle que définie ci-dessus, le pourcentage molaire du monomère fonctionnel Y dans le copolymère B est supérieur ou égal à 0,7%.

Préférentiellement, dans la composition telle que définie ci-dessus, le pourcentage molaire du monomère fonctionnel Y dans le copolymère B va de 0,7% à 10%.

Préférentiellement, dans la composition telle que définie ci-dessus, le monomère fonctionnel Y du copolymère B est un monomère porteur d'une fonction époxyde, ledit monomère fonctionnel Y étant choisi parmi les esters de glycidyle aliphatiques, les éthers de glycidyle aliphatiques, les esters de glycidyle alicycliques et les éthers de glycidyle alicycliques.

Préférentiellement, dans la composition telle que définie ci-dessus, le monomère fonctionnel Y du copolymère B est choisi parmi le méthacrylate de glycidyle et l'acrylate de glycidyle.

Préférentiellement, dans la composition telle que définie ci-dessus, le monomère d'alpha-oléfine du copolymère B est l'éthylène.

Préférentiellement, dans la composition telle que définie ci-dessus, le copolymère B est choisi parmi les copolymères éthylène/méthacrylate de glycidyle, les copolymères éthylène/acrylate de glycidyle, les copolymères éthylène/acrylate d'alkyle en C1-C10/méthacrylate de glycidyle, les copolymères éthylène/acrylate d'alkyle en C1-C10/acrylate de glycidyle, les copolymères d'éthylène/acétate de vinyle/acrylate de glycidyle, les copolymères d'éthylène/acétate de vinyle/méthacrylate de glycidyle, les copolymères éthylène/méthacrylate d'alkyle en C1-C10/méthacrylate de glycidyle et les copolymères éthylène/méthacrylate d'alkyle en C1-C10 /acrylate de glycidyle.

Préférentiellement, dans la composition telle que définie ci-dessus, le copolymère A est constitué de monomère d'éthylène et de monomère d'acétate de vinyle.

Préférentiellement, la composition telle que définie ci-dessus comprend un mélange de copolymères A différents les uns des autres.

Préférentiellement, dans la composition telle que définie ci-dessus, le taux de copolymère A ou le mélange de copolymères A est égal à 100 pce.

Préférentiellement, la composition telle que définie ci-dessus comprend, en outre un polymère C, différent du copolymère A et du copolymère B.

Préférentiellement, dans la composition telle que définie ci-dessus, le polymère C est un élastomère diénique et a un taux molaire de motif diénique inférieur à 15 %.

Préférentiellement, dans la composition telle que définie ci-dessus, le taux de charge renforçante inorganique va de 30 à 80 pce.

Préférentiellement, dans la composition telle que définie ci-dessus, le taux de copolymère B va de 1 à 25 pce.

Préférentiellement, dans la composition telle que définie ci-dessus, le taux de copolymère B est supérieur ou égal à 5% en poids par rapport au poids de la charge renforçante inorganique.

Préférentiellement, dans la composition telle que définie ci-dessus, le taux de copolymère B va de 5% à 30% en poids par rapport au poids de la charge renforçante inorganique.

Préférentiellement, dans la composition telle que définie ci-dessus, la charge renforçante inorganique comprend de la silice.

L'invention a aussi pour objet un article semi-fini pour pneumatique comprenant au moins une composition telle que décrite ci-dessus.

L'invention a également pour objet un pneumatique comprenant au moins une composition telle que définie ci-dessus ou comprenant au moins un article semi-fini pour pneumatique tel que décrit ci-dessus.

L'invention concerne également l'utilisation de la composition telle que définie ci-dessus dans des mousses ou articles en mousse, ou comme additifs chocs de matériaux thermoplastiques, ou comme additifs pour bitume, ou encore dans des colles structurales thermo-fusibles ou dans le domaine de la câblerie.

### I. MESURES ET TESTS UTILISES

### I-1) Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation) les modules sécants nominaux (ou contraintes apparentes, en MPa), à 50% d'allongement (notés MA50), à 100% d'allongement (notés MA100) et à 300% d'allongement (notés MA300). On mesure également les contraintes à la rupture (en MPa). Toutes ces mesures de traction sont effectuées dans les conditions normales de température (23 ± 2°C) et d'hygrométrie (50 ± 5% d'humidité relative), selon la norme française NF T 40-101 de décembre 1979 et dans les conditions de température suivante : 100 ± 2°C.

### I-2) Mesure de la surface spécifique BET

La surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

### II. DESCRIPTION DETAILLEE

Ainsi, l'invention concerne une composition de caoutchouc à base d'au moins :
- un copolymère A avec un taux supérieur ou égal à 50 pce, ledit copolymère A étant un copolymère à base d'au moins un monomère d'éthylène et d'au moins un monomère d'acétate de vinyle,
- une charge renforçante inorganique qui se caractérise par la présence de groupes hydroxyle à sa surface, le taux de charge renforçante inorganique étant supérieur ou égal à 20 pce,
- à titre d'agent de couplage entre ledit copolymère A et ladite charge renforçante inorganique un copolymère B différent dudit copolymère A, ledit copolymère B étant un copolymère à base d'au moins un monomère d'alpha-oléfine et d'au moins un monomère fonctionnel Y,
   le monomère fonctionnel Y étant choisi parmi les monomères porteurs d'une fonction époxyde et les monomères porteurs d'une fonction acide carboxylique, le pourcentage molaire dudit monomère fonctionnel Y dans ledit copolymère B est supérieur ou égal à 0,5%, et
- un système de réticulation aux peroxydes.

Dans la présente description, sauf indication expresse différente, tous les pourcentages (%) indiqués sont des pourcentages en masse.

D'autre part, tout intervalle de valeurs désigné par l'expression « entre a et b » représente le domaine de valeurs allant de plus de « a » à moins de « b » (c'est-à-dire bornes a et b exclues) tandis que tout intervalle de valeurs désigné par l'expression « de a à b » signifie le domaine de valeurs allant de « a » jusqu'à « b » (c'est-à-dire incluant les bornes strictes a et b). Dans la présente, lorsqu'on désigne un intervalle de valeurs par l'expression « de a à b », on désigne également et préférentiellement l'intervalle représenté par l'expression « entre a et b ».

L'abréviation « pce » (usuellement « phr » en anglais pour « per hundred part of rubber ») signifie parties en poids pour cent parties en poids d'élastomère (ou du total des élastomères si plusieurs élastomères sont présents) ou caoutchouc présents dans la composition de caoutchouc. L'utilisation de cette unité est conventionnelle dans le domaine des compositions de caoutchouc. Par extension, pour les compositions de l'invention, l'abréviation « pce » signifiera également parties en poids pour cent parties en poids de copolymère A. Lorsque la composition comprend, par exemple, un couplage de copolymère A et d'élastomère, la somme des taux massiques du copolymère A et du ou des élastomère(s) est égale à 100 pce et le taux massique des autres constituants de la composition est exprimé en pce par rapport aux 100 pce du copolymère A et du ou des élastomère(s).

Par « composition de caoutchouc à base de », il faut entendre une composition de caoutchouc comportant le mélange et/ou le produit de réaction des différents constituants utilisés, certains de ces constituants de base étant susceptibles de, ou destinés à réagir entre eux, au moins en partie, lors des différentes phases de fabrication de la composition, en particulier au cours de sa réticulation ou vulcanisation.

De façon usuelle dans la présente demande, on utilise indifféremment dans la présente description les termes « élastomère » et « caoutchouc ». Ces termes sont interchangeables.

Par « polymère », on entend une macromolécule linéaire ou ramifiée ayant une séquence constituée de plusieurs unités répétitives (ou motif monomère), ces unités répétitives pouvant avoir la même structure chimique ou une structure chimique différente (on parlera alors éventuellement de copolymère ou de terpolymère).

Toutes les valeurs de température de transition vitreuse « Tg » sont mesurées de manière connue par DSC (Differential Scanning Calorimetry) selon la norme ASTM D3418 de 1999 sauf mention expresse différente.

On peut par exemple mesurer la quantité (en masse ou en mol) de chaque monomère à l'intérieur du polymère c'est-à-dire du copolymère A, du copolymère B et du polymère C en utilisant les techniques connues de spectroscopie infrarouge à transformée de Fourrier et la norme ISO8985 de 1998.

Selon l'invention, les produits carbonés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les composés (tels que les monomères, les polymères), les réactifs et autres composants mentionnés dans la description, telles que les charges, etc.

### o Copolymère A

La composition de caoutchouc conforme à l'invention comprend au moins un copolymère A, à un taux supérieur ou égal à 50 pce, ledit copolymère A étant un copolymère à base d'au moins un monomère d'éthylène et d'au moins un monomère d'acétate de vinyle.

Par « copolymère à base d'au moins un monomère d'éthylène et d'au moins un monomère d'acétate de vinyle», on entend un polymère à base d'au moins un ou plusieurs monomères d'éthylène et d'au moins un ou plusieurs monomères d'acétate de vinyle. Ce type de copolymère est bien connu de l'homme du métier sous le nom de copolymère EVA. Ce copolymère peut donc résulter de la polymérisation de monomères éthylène (monomères E) et de monomères d'acétate de vinyle (monomères VA). Il est entendu que d'autres monomères différents des monomères d'éthylène et d'acétate de vinyle peuvent être optionnellement présents dans le copolymère. Ce ou ces monomères différents (monomères X) présentent des fonctions polymérisables de réactivité identique ou sensiblement identique avec les monomères E et les monomères VA et peuvent être distribués statistiquement le long de la chaîne du copolymère.

Les monomère X peuvent être choisis parmi les esters d'acide carboxyliques insaturés tels que par exemples les acrylates d'alkyle en C1-C10 ou les méthacrylates d'alkyles en C1-C10, les alpha-oléfines telles que le propène, le 1-butène, 1-hexène, les monomères porteurs d'une fonction époxyde, les monomères porteurs d'une fonction anhydride, les monomères porteurs d'une fonction acide carboxylique. Conviennent notamment à titre de monomère X, les monomères suivants : les acrylates d'alkyle en C1-C10, les méthacrylates d'alkyle en C1-C10, le méthacrylate de glycidyle, l'acrylate de glycidyle, l'anhydride maléique, les hémi-esters de l'anhydride maléique, l'acide acrylique et l'acide méthacrylique.

La composition conforme à l'invention peut comprendre un ou plusieurs copolymères A, c'est-à-dire un mélange ou un couplage de deux ou plusieurs copolymères A différents. Par exemple, la composition peut comprendre un copolymère d'éthylène et d'acétate de vinyle et un terpolymère d'éthylène/acétate de vinyle/monomère X ou bien lorsque le copolymère A est constitué de monomère d'éthylène et d'acétate de vinyle, la composition peut comprendre des copolymères ayant des teneurs molaires en monomères d'éthylène différentes.

Le copolymère A (ou le mélange de copolymères A) est (sont) le copolymère majoritaire de la composition de l'invention, c'est-à-dire qu'il(s) représente(nt) au moins 50% en poids du poids total des polymères de la composition. Autrement dit, le ou les copolymères A est (sont) présent(s) dans la composition à un taux supérieur ou égal à 50 pce, de préférence strictement supérieur à 50 pce.

Préférentiellement, le taux molaire de monomère d'éthylène dans le copolymère A est supérieur ou égal à 51%, de préférence supérieur ou égal à 55%. Plus préférentiellement, le taux molaire de monomère d'éthylène dans le copolymère A va de 57% à 90%, de manière encore plus préférée va de 57% à 85%.

Lorsque le copolymère A résulte de la copolymérisation de monomères d'éthylène, d'acétate de vinyle et d'un ou plusieurs monomères X, le pourcentage molaire du ou des monomères X (y compris celui des monomères X préférés ci-dessus) est strictement inférieur à 0,3% ; le taux molaire de monomère d'éthylène est avantageusement supérieur ou égal à 51%.

Préférentiellement, lorsque le copolymère A résulte de la copolymérisation de monomères d'éthylène, d'acétate de vinyle et d'un ou plusieurs monomères X, le pourcentage molaire du ou des monomères X (y compris celui des monomères X préférés ci-dessus) est strictement inférieur à 0,3% ; le taux molaire de monomère d'éthylène va avantageusement de 57% à 85%.

Préférentiellement, le copolymère A est constitué de monomères d'éthylène et de monomères d'acétate de vinyle. Autrement dit la somme des pourcentages molaires de monomères d'éthylène et de monomères d'acétate de vinyle dans le copolymère A est égale à 100%.

Les copolymères A sont préférentiellement des polymères statistiques. Ils peuvent être notamment obtenus par polymérisation haute pression des monomères correspondants avec les procédés connus de l'homme du métier. Ces copolymères peuvent être notamment obtenus selon les procédés décrits dans les documents EP0341499A2 et EP0307755A2.

Les copolymères A décrits précédemment présentent une température de transition vitreuse Tg dans la très grande majorité des cas qui est négative (c'est-à-dire inférieure à 0°C, mesurée à pression atmosphérique). La Tg des copolymères A décrits ci-dessus est mesurée de manière connue par DSC (Differential Scanning Calorinetry) selon la norme ASTM D3418 de 1999.

Les copolymères A sont disponibles commercialement notamment auprès de fournisseurs tels que Arkema, E.I du Pont de Nemours and Company, Arlanxeo.

Selon un mode de réalisation de la composition selon l'invention, le taux de copolymère A ou du mélange de copolymères A dans la composition est égal à 100 pce.

### ∘ Polymère C

Selon un autre mode de réalisation de l'invention, la composition peut comprendre, en outre, au moins un polymère C différent du ou des copolymères A.

De préférence, ce polymère C est un élastomère diénique.

Par élastomère « diénique » qu'il soit naturel ou synthétique, doit être compris un élastomère constitué au moins en partie (c'est-à-dire un homopolymère ou un copolymère) de monomère(s) diène(s) (i.e., porteur(s) de deux doubles liaisons carbone-carbone, conjuguées ou non).

Ces élastomères diéniques peuvent être classés dans deux catégories : « essentiellement insaturés » ou « essentiellement saturés ». On entend en général par « essentiellement insaturé », un élastomère diénique issu au moins en partie de monomères diènes conjugués, ayant un taux de motifs ou unités d'origine diénique (diènes conjugués) qui est supérieur à 15% (% en mol) ; c'est ainsi que des élastomères diéniques tels que les caoutchoucs de butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique, faible ou très faible, toujours inférieur à 15% (en mol)). Dans la catégorie des élastomères diéniques "essentiellement insaturés", on entend en particulier par élastomère diénique « fortement insaturé » un élastomère diénique ayant un taux en moles de motifs d'origine diénique (diènes conjugués) qui est supérieur à 50% (en mol).

Ces définitions étant données, on entend plus particulièrement par élastomère diénique susceptible d'être utilisé dans les compositions conformes à l'invention:
(a) - tout homopolymère d'un monomère diène conjugué, notamment tout homopolymère obtenu par polymérisation d'un monomère diène conjugué ayant de 4 à 12 atomes de carbone ;
(b) - tout copolymère obtenu par copolymérisation d'un ou plusieurs diènes conjugués entre eux ou avec un monomère d'éthylène ou avec un ou plusieurs composés de vinyle aromatique ayant de 8 à 20 atomes de carbone ;
(c) - un copolymère ternaire obtenu par copolymérisation d'éthylène, d'une α-oléfine ayant de 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène ;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que ce mode de réalisation est de préférence mise en œuvre avec des élastomères diéniques essentiellement insaturés, en particulier du type (a) ou (b) ci-dessus.

Les élastomères diéniques peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères diéniques peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à une charge inorganique renforçante telle que silice, on peut citer par exemple des groupes fonctionnels silanol ou polysiloxane ayant une extrémité silanol (tels que décrits par exemple dans FR2740778A1 ou US6013718, et WO2008/141702A1), des groupes alkoxysilane (tels que décrits par exemple dans FR2765882A1 ou US5977238), des groupes carboxyliques (tels que décrits par exemple dans WO01/92402A1 ou US6815473, WO2004/096865A2 ou US2006/0089445) ou encore des groupes polyéther (tels que décrits par exemple dans EP1127909A1 ou US6503973, WO2009/000750A1 et WO2009/000752A1).

On peut aussi citer comme élastomères diéniques fonctionnels ceux préparés par l'utilisation d'un amorceur fonctionnel, notamment ceux portant une fonction amine ou étain (voir par exemple WO2010/072761A1).

Comme autres exemples d'élastomères diéniques fonctionnalisés, utilisables dans l'invention, on peut citer également des élastomères (tels que BR, NR ou IR) du type époxydés.

De préférence, le polymère C est un élastomère diénique et a un taux molaire de motif diénique inférieur à 15 %.

### ∘ Charge renforçante inorganique

Comme indiqué précédemment, la composition de caoutchouc de l'invention comporte au moins une charge renforçante inorganique qui se caractérise par la présence de groupes hydroxyle à sa surface.

Par « charge inorganique renforçante », doit être entendu ici toute charge inorganique ou minérale, quelles que soient sa couleur et son origine (naturelle ou de synthèse), encore appelée charge « blanche », charge « claire » ou même charge « non-noire » (« non-black filler ») par opposition au noir de carbone ; cette charge inorganique étant capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique. La charge inorganique renforçante selon l'invention se caractérise par la présence de groupes hydroxyle (-OH) à sa surface, nécessitant pour être utilisée à titre de charge renforçante l'emploi d'un agent ou système de couplage destiné à assurer une liaison chimique stable la charge et la matrice élastomérique.

Comme charges renforçantes inorganiques conviennent notamment des charges minérales de type siliceuses, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil 7000 » et « Ultrasil 7005 » de la société Evonik, les silices « Zeosil 1165MP, 1135MP et 1115MP » ainsi que la silice « Zeosil Premium 200 » de la société Solvay, la silice « Hi-Sil EZ150G » de la société PPG, les silices « Zeopol 8715, 8745 et 8755 » de la Société Huber, les silices à haute surface spécifique telles que décrites dans la demande WO03/016387A1.

Bien entendu, on entend également par charge renforçante inorganique des mélanges de différentes charges inorganiques renforçantes, en particulier de silices hautement dispersibles telles que décrites ci-dessus ou un mélange de charges inorganique de type siliceuse et de charges inorganique non siliceuse. A titre de charges inorganiques non siliceuses, on peut citer les charges minérales du type alumineuses, en particulier de l'alumine (Al₂O₃) ou des (oxydes)hydroxydes d'aluminium, ou encore des oxydes de titane renforçants, par exemple ceux décrits dans US6610261 et US6747087. Les charges inorganiques non siliceuses, lorsque présentes, sont minoritaires dans la charge renforçante.

L'état physique sous lequel se présente la charge renforçante inorganique est indifférent, que ce soit sous forme de poudre, de microperles, de granulés, ou encore de billes.

Préférentiellement, la charge renforçante inorganique comprend de la silice. Plus préférentiellement, la charge renforçante inorganique est constituée de silice.

Il est entendu que l'homme du métier sait appliquer le taux de charge renforçante inorganique en fonction des applications visées de la composition de caoutchouc.

Le taux de la charge renforçante, dans la composition de caoutchouc conforme à l'invention est supérieur ou égal à 20 parties en poids pour cent parties d'élastomère. De préférence, le taux de la charge renforçante, dans la composition de caoutchouc conforme à l'invention va de 30 à 80 parties en poids pour cent parties d'élastomère.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyle, nécessitant l'utilisation d'un agent de couplage pour établir la liaison entre la charge et le ou les copolymère(s) A. A titre d'exemple, on peut citer par exemple des noirs de carbone pour pneumatiques tels que décrits par exemple dans les documents brevet WO96/37547A2 et WO99/28380A1.

### o Noir de carbone

Selon un mode de réalisation de l'invention, la composition de caoutchouc peut comprendre, en outre, une charge renforçante tel que du noir de carbone.

Le noir de carbone, lorsqu'il est présent, peut être utilisé de préférence à un taux inférieur ou égal à 10 pce, de préférence inférieur ou égal à 5 pce. De préférence, le taux de noir de carbone peut aller de 0,5 à 4 pce. Ces plages préférentielles s'appliquent à l'un quelconque des modes de réalisation de l'invention.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs des séries 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

### o Copolymère B

Comme vu précédemment, la composition de caoutchouc de l'invention comporte au moins un copolymère B, différent du copolymère A, ledit copolymère B étant un copolymère à base d'au moins un monomère d'alpha-oléfine et d'au moins un monomère fonctionnel Y, le monomère fonctionnel Y étant choisi parmi les monomères porteurs d'une fonction époxyde et les monomères porteurs d'une fonction acide carboxylique, le pourcentage molaire dudit monomère fonctionnel Y dans ledit copolymère B est supérieur ou égal à 0,5%.

Le copolymère B résulte de la copolymérisation d'un ou plusieurs monomère(s) d'alpha-oléfine et d'un ou plusieurs monomère(s) fonctionnel(s) Y. Le pourcentage molaire du ou des monomère(s) fonctionnel(s) Y dans le copolymère B est d'au moins 0,5%, de préférence d'au moins 0,7%. De manière encore plus préférée, le pourcentage molaire du ou des monomère(s) fonctionnel(s) Y dans le copolymère B va de 0,7 à 10%.

Le ou les monomère(s) fonctionnel(s) Y du copolymère B est (sont) choisi(s) dans le groupe formé par les monomères porteurs d'une fonction époxyde et les monomères porteurs d'une fonction acide carboxylique. Autrement dit, la fonction qui est capable de se lier physiquement et/ou chimiquement à la charge renforçante inorganique est la fonction acide carboxylique ou la fonction époxyde (ou les hydroxyles résultants de l'ouverture de la fonction époxyde).

Préférentiellement, le ou les monomère(s) fonctionnel(s) Y du copolymère B est (sont) choisi(s) dans le groupe formé par les monomères d'ester de glycidyle aliphatiques, les monomères d'éther de glycidyle aliphatiques, les monomères d'ester de glycidyle alicycliques, les monomères d'éther de glycidyle alicycliques, les monomères d'acide acrylique, les sels des monomères d'acide acrylique, les monomères d'acide méthacrylique et les sels des monomères d'acide méthacrylique.

Plus préférentiellement, le ou les monomère(s) fonctionnel(s) Y du copolymère B est (sont) un monomère porteur d'une fonction époxyde.

Plus préférentiellement encore, le ou les monomère(s) fonctionnel(s) Y du copolymère B est (sont) choisi(s) dans le groupe formé par les monomères d'ester de glycidyle aliphatiques, les monomères éther de glycidyle aliphatiques, les monomères d'ester éther de glycidyle alicycliques et les monomères d'éther de glycidyle alicycliques.

Plus préférentiellement encore, le ou les monomère(s) Y du copolymère B est (sont) choisi(s) parmi les méthacrylates de glycidyle et les acrylates de glycidyle.

Par « monomère d'alpha-oléfine », on entend un monomère alcène comportant une double liaison carbone-carbone entre le premier et le second atome de carbone dudit alcène (position alpha). A titre de monomère d'alpha-oléfine, on peut citer l'éthylène, le propylène, le 1-butène, le 1-pentène, le 3-méthyl-1-butène, le 1-hexène, le 4-méthyl-1-pentène et le 3-méthyl-1-pentène.

Préférentiellement, le monomère d'alpha-oléfine du copolymère B est l'éthylène.

Le copolymère B utilisé dans la présente invention peut également être un terpolymère, c'est à dire résulter de la polymérisation d'au moins un monomère d'alpha-oléfine, d'au moins un monomère fonctionnel Y (ainsi que les monomères Y fonctionnels préférés) tel que défini ci-dessus et d'au moins un troisième monomère différent des deux précédents monomères.

Préférentiellement, lorsque le copolymère B est un terpolymère, le troisième monomère est choisi parmi les acrylates d'alkyle en C1-C10, les méthacrylates d'alkyle en C1-C10, les monomères d'alpha-oléfine différents de l'éthylène, et les esters vinyliques d'acides carboxyliques. Les chaînes alkyle des acrylates et méthacrylates peuvent avoir avantageusement de 1 à 6 atomes de carbone.

Plus préférentiellement, le troisième monomère est choisi parmi le propylène, le 1-butène, l'isobutène, les acrylates de méthyle, les acrylates d'éthyle, les acrylates de propyle, les acrylates de butyle, les méthacrylates de méthyle, les méthacrylates d'éthyle, les méthacrylates de propyle, les méthacrylates de butyle, l'acétate de vinyle, l'éthanoate de vinyle, le propionate de vinyle, le butyrate de vinyle.

Préférentiellement, le copolymère B est choisi parmi les polymères éthylène/méthacrylate de glycidyle, les copolymères éthylène/acrylate de glycidyle, les copolymères éthylène/acrylate d'alkyle en C1-C10/méthacrylate de glycidyle, les copolymères éthylène/acrylate d'alkyle en C1-C10/acrylate de glycidyle, les copolymères éthylène/méthacrylate d'alkyle en C1-C10/méthacrylate de glycidyle, les copolymères éthylène/méthacrylate d'alkyle en C1-C10/acrylate de glycidyle, les copolymères éthylène/acétate de vinyle/méthacrylate de glycidyle et les copolymères éthylène/acétate de vinyle/acrylate de glycidyle.

Le copolymère B utilisé dans la présente invention est un agent de couplage, aussi appelé agent de liaison. L'agent de couplage a pour fonction d'assurer la liaison entre la surface des particules de charge inorganique renforçante et le copolymère A ou les copolymères A de la composition de caoutchouc, tout en facilitant la dispersion de cette charge inorganique renforçante au sein de la matrice élastomérique, formée par le ou les copolymères A et éventuellement le polymère C. L'utilisation d'un copolymère B spécifique en tant qu'agent de couplage permet d'obtenir des compositions dont la matrice élastomérique comprend majoritairement un ou plusieurs copolymères A tels que décrits ci-dessus, et qui présentent notamment de bonnes propriétés de renforcement.

Il est bien entendu que l'homme du métier sait ajuster le taux de copolymère B en fonction du taux de charge renforçante inorganique utilisée dans les compositions conformes à l'invention.

Préférentiellement, le ou les copolymère(s) B va (vont) de 1 à 25 pce.

Préférentiellement, le taux de copolymère B est supérieur ou égal à 5% en poids par rapport au poids de la charge renforçante inorganique. De préférence, le taux de copolymère B va de 5% à 30% en poids par rapport au poids de la charge renforçante inorganique.

Le copolymère B peut être obtenu par toute technique de polymérisation ou de greffage bien connue de l'homme du métier. Les documents FR2569411A1, FR2498609A1, FR2660660A1, EP174244A1 et EP177378A1 illustrent des procédés de synthèse des copolymères B utilisés dans les compositions de l'invention ; en particulier ces documents décrivent la production de terpolymères éthylène-acrylate-autre monomère (notamment tel que cité ci-dessus) sous haute pression en réacteur autoclave.

Les copolymères B, en particulier ceux porteurs de fonction(s) époxy sont notamment disponibles commercialement auprès d'Arkema (sous le nom de Lotader), Du Pont (certains Elvaloy) et Sumitomo (sous le nom d'Igetabond).

### ∘ Additifs divers

Les compositions de caoutchouc conformes à l'invention peuvent comporter également tout ou partie des additifs usuels habituellement utilisés dans les compositions de caoutchouc notamment destinées à la fabrication d'articles semi-fini, tel que des bandes de roulement, et finis tels que des pneumatiques, comme par exemple des pigments, des agents de protection tels que les cires anti-ozone comme par exemple de la paraffine, des anti-ozonants chimiques, des anti-oxydants, des agents anti-fatigue et des plastifiants. Ces compositions peuvent aussi être contenir des stabilisants thermiques, des agents glissants ou anti-bloquants provenant des produits commerciaux de copolymères A et/ou B vendus notamment sous forme de poudre ou granulé afin d'éviter le collage des grains de poudre ou de granulé les uns aux autres.

### ∘ Système de réticulation aux peroxydes

Comme précisé précédemment, la composition de l'invention comprend au moins un système de réticulation aux peroxydes.

Par « système de réticulation aux peroxydes », on entend l'utilisation d'un ou de plusieurs peroxydes destinés à réticuler un polymère, notamment un copolymère et/ou un élastomère. Le ou les peroxydes forme(nt) lors de son (leur) activation des radicaux libres sur le copolymère, notamment sur le ou les élastomères, ce qui permet la réticulation des chaînes du copolymère (de l'élastomère) sans que le(s) peroxyde(s) s'intègre(nt) dans ces chaînes. Les peroxydes sont bien connus de l'homme du métier.

Parmi les peroxydes, bien connus de l'homme de l'art, il est préférable d'utiliser pour l'invention au moins un peroxyde choisi dans la famille des peroxydes organiques. Par peroxyde organique, on entend toute molécule hydrocarbonée comprenant une fonction de type peroxy O-O. Par exemple, les peroxydes organiques utiles sont ceux qui se décomposent rapidement dans l'intervalle de température de 140°C à 220°C.

Les peroxydes organiques peuvent être avantageusement choisis parmi les familles des peroxydes de dialkyle ou les peroxyesters. En particulier, le ou les peroxyde(s) organique(s) peut (peuvent) être choisi(s) parmi le 2-éthylperhexanoate de tert-butyle, le peroxyde de dicumyle, le peroxyde de benzoyle, le peroxyde de dibenzoyle, le peroxyde de ditertbutyle, le peroxyde de tert-butylcumyle, le 2,5-bis (tert-butylperoxy)-2,5-diméthylhexane, et les mélanges de ces derniers.

Il existe dans le commerce divers produits conditionnés, connus sous leurs marques de fabrique ; on peut citer :-le « Dicup » de la société Hercules Powder Co., le « Perkadox Y12 » de la Société Noury van der Lande, le « Peroximon F40 » de la société Montecatini Edison S.p.A., le « Trigonox » de la Société Noury van der Lande, le « Varox » de la société R.T.Vanderbilt Co., ou encore le « Luperko », de la société Wallace & Tiernan, Inc.

Préférentiellement, la quantité de peroxydes à utiliser pour les besoins de l'invention est inférieure ou égale à 3 pce. De préférence, la quantité de peroxydes dans la composition est comprise dans un domaine allant de 0,1 à 3 pce. Plus préférentiellement, la quantité de peroxydes dans la composition est comprise dans un domaine allant de 0,2 à 2 pce.

Le système de réticulation aux peroxydes peut comprendre, en outre, un coagent et ou un solvant tels que ceux décrits notamment dans le document WO2011/067504A1.

### ∘ Fabrication des compositions conforme à l'invention

Les compositions de caoutchouc de l'invention sont fabriquées dans des mélangeurs appropriés, en utilisant deux phases de préparation successives selon une procédure générale bien connue de l'homme du métier.

La première phase (non-productive) est conduite préférentiellement en plusieurs étapes thermomécaniques. Au cours d'une première étape on introduit, dans un mélangeur approprié tel qu'un mélangeur interne usuel, le copolymère A à base de monomères d'éthylène et de monomères d'acétate de vinyle, éventuellement un ou plusieurs élastomère(s) différents du copolymère A à base de monomères d'éthylène et de monomères d'acétate de vinyle, la ou les charges renforçantes inorganiques, le copolymère B et/ou d'autres ingrédients à l'exception du système de réticulation aux peroxydes, à une température comprise entre 20°C et 100°C et, de préférence, entre 25°C et 100°C. Après quelques minutes, préférentiellement de 0,5 à 2 min et une montée de la température de pour atteindre 100°C, les autres ingrédients (c'est-à-dire, ceux qui restent si tous n'ont pas été mis au départ) sont ajoutés en une fois ou par parties, à l'exception du système de réticulation aux peroxydes durant un mélangeage allant de 20 secondes à quelques minutes. La durée totale du malaxage, dans cette phase non-productive, est de préférence comprise entre 2 et 10 minutes à une température inférieure ou égale à 180°C, et préférentiellement inférieure ou égale à 170°C et sous pression de quelques bar (1 bar = 100 000 Pa). L'homme du métier sait adapter la pression en fonction du mélangeur utilisé.

Après refroidissement du mélange ainsi obtenu, on incorpore alors le système de réticulation aux peroxydes à basse température (typiquement inférieure à 100°C), généralement dans un mélangeur externe tel qu'un mélangeur à cylindres ; le tout est alors mélangé (deuxième phase dite phase productive) pendant quelques minutes, par exemple entre 5 et 15 min. L'homme du métier sait choisir le système de réticulation aux peroxydes approprié en fonction des copolymères et polymères utilisés et de la température à laquelle s'effectue la réticulation.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis afin d'obtenir des produits tels qu'une bande de roulement. Ces produits peuvent ensuite être utilisés pour la fabrication de pneumatiques, selon les techniques connues de l'homme du métier.

La réticulation (ou cuisson) est conduite de manière connue à une température généralement comprise entre 130°C et 200°C, sous pression de quelques dizaines de bar, pendant un temps suffisant qui peut varier par exemple entre 5 et 90 min en fonction notamment de la température de cuisson, du système de réticulation adopté, de la cinétique de réticulation de la composition considérée ou encore de la taille du pneumatique.

### ∘ Article semi-fini pour pneumatique

Un autre objet de la présente invention concerne un article semi-fini pour pneumatique comprenant au moins une composition de caoutchouc réticulable (à réticuler) (apte ou réticulé) telle que définie ci-dessus ou susceptible d'être obtenue par le procédé décrit ci-dessus.

Un produit semi-fini est un produit en caoutchouc destiné à la fabrication de pneumatique. Ce peut être tout type bande de gommes, telle que notamment des bandes de roulement, des sous-couches, des nappes d'armature de sommet (par exemple des nappes de travail, des nappes de protection ou des nappes de frettage), de nappes d'armature de carcasse, des nappes de flancs, des nappes de bourrelets, des nappes de protecteurs, des nappes de sous-couches, des nappes de blocs de caoutchouc et autres nappes assurant l'interface entre les zones précitées des pneumatiques. De préférence, l'article semi-fini est une bande de roulement.

### ∘ Pneumatique

L'invention a également pour objet un pneumatique comprenant au moins un article semi-fini pour pneumatique tel que mentionné ci-dessus ou comprenant au moins une composition telle que définie ci-dessus.

Le pneumatique selon l'invention peut être destiné à équiper notamment les véhicules sans moteur tels que les bicyclettes, les véhicules à moteur de type tourisme, les SUV (Sport Utility Vehicles), les deux roues (notamment les motos), les avions, les véhicules industriels choisis parmi les camionnettes, les poids-lourds (c'est-à-dire le métro, les bus, les engin routiers (camions et remorques)), les véhicules hors la route, tels que les engins agricoles ou de génie civil, les autres véhicules de transports ou de manutention.

### ∘ Mousse

L'invention a également pour objet une mousse ou un article en mousse, notamment une mousse ou un article de mousse à base de la composition ci-dessus et d'agents gonflants ayant des propriétés isolantes, insonorisantes, anti-vibrations ou de renfort, utilisée dans le domaine du sport et des loisirs- comme structure de ballon, épaulette de protection. Par « mousse » ou « structure de mousse », on entend un objet ou article ou matériau de densité inférieure à celle du produit de départ.

### ∘ Utilisation comme additifs

L'invention a également pour objet l'utilisation de la composition telle que définie ci-dessus comme additifs chocs (pour augmenter la résistance aux chocs) de matériaux thermoplastiques, comme additifs pour bitume.

### ∘ Colle, cablerie

La composition selon l'invention peut aussi être utilisée dans des colles structurales thermo-fusibles ou dans le domaine de la cablerie, notamment comme couche isolante ou comme couche retardateur de flamme ; dans cette dernière utilisation, la composition peut contenir avantageusement un additif anti-feu non halogéné.

### III. EXEMPLES

Les exemples qui suivent permettent d'illustrer l'invention, cette dernière ne saurait cependant être limitée à ces seuls exemples.

### III-1) Préparation des compositions:

On procède pour les essais qui suivent à la préparation des compositions de la manière suivante : on introduit dans un mélangeur interne, rempli à 70% et dont la température initiale de cuve est d'environ 50°C, le ou les copolymères et polymères, la charge renforçante inorganique (silice), l'agent de couplage puis, après une à deux minutes de malaxage, les divers autres ingrédients à l'exception du système de réticulation ou du système de vulcanisation. On conduit alors un travail thermomécanique (phase non-productive) en une étape (durée totale du malaxage égale à environ 5 min), jusqu'à atteindre une température maximale de « tombée » d'environ 165°C à pression atmosphérique (Pa).

On récupère le mélange ainsi obtenu, on le refroidit puis on ajoute le système de réticulation (peroxydes) ou de vulcanisation (soufre et accélérateur) sur un mélangeur externe (homo-finisseur) à 70°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques après cuisson, soit sous la forme de profilés utilisables directement, après découpage et/ou assemblage aux dimensions souhaitées, par exemple comme produits semi-finis pour pneumatiques, en particulier comme bandes de roulement de pneumatiques.

Pour pouvoir être utilisées dans des pneumatiques, les compositions de caoutchouc doivent présenter un certain nombre de propriétés, dont notamment une rigidité qui évolue peu en fonction de la température, un bon renforcement et une bonne contrainte à la rupture.

Plus particulièrement, pour la composition selon la présente invention, ces propriétés sont obtenues lorsque :
(a) le rapport des modules sécants nominaux à 50% d'allongement (MA50) mesuré à 23°C et à 100°C est inférieur ou égal à 2 soit ((MA50 (à 23°C)/MA50 (à 100°C) ≤ 2) ;
(b) le rapport des modules sécants nominaux à 100 % d'allongement (MA100) mesuré à 23°C et à 100°C est inférieur ou égal à 2 soit ((MA100 (à 23°C)/MA100 (à 100°C) ≤ 2) ;
(c) le rapport du module sécant nominal à 300 % d'allongement (MA 300) mesuré à 23°C et du module sécant nominal à 100 % d'allongement (MA 100) mesuré à 23°C est supérieur ou égal à 3 soit ((MA300 (à 23°C)/MA100 (à 23°C) ≥ 3) ;
(d) le rapport du module sécant nominal à 300 % d'allongement (MA 300) mesuré à 100°C et du module sécant nominal à 100 % d'allongement (MA 100) mesuré à 100°C est supérieur ou égal à 3 soit ((MA300 (à 100°C)/MA100 (à 100°C) ≥ 3) ;
(e) une contrainte nominale à la rupture strictement supérieure à 12,5 MPa ;
(f) un module sécant nominal à 300% d'allongement mesuré à 23°C (MA300) strictement supérieure à 7,5 MPa.

Les mesures (a) et (b) concernent l'évolution de la rigidité en fonction de la température. Les mesures (c) et (d) concernent les propriétés de renforcement à une faible température (23°C) et à une température élevée (100°C) respectivement. La mesure (e) représente la résistance aux grandes déformations. La mesure (f) concerne la rigidité de la composition de caoutchouc.

La composition T1 est une composition témoin classiquement utilisée et commercialisée pour la fabrication de bande de roulement de pneumatiques. Elle remplit les critères (a) à (f) énumérer ci-dessus, donc possède les propriétés recherchées pour une utilisation en pneumatique.

On a recherché à obtenir ces propriétés, voire à en améliorer certaines, en modifiant l'élastomère utilisé. Ces modifications sont détaillées dans les essais A. Les essais B à D illustrent d'autres modes de réalisation de l'invention.

### III-2) Essai A:

Les exemples présentés dans le tableau 1 ont pour objet de comparer les différentes propriétés de caoutchouterie de la composition C1 conforme à l'invention à une série de compositions témoins (T1 à T4). Les résultats des propriétés mesurées après cuisson sont présentés au tableau 2.

Les taux des différents constituants des compositions présentées dans le tableau 1 sont exprimés en pce (partie en poids pour cent parties en poids d'élastomère).

Bien que les taux en pce de silice et d'agent de couplage varient, les compositions témoins (T1 , T2, T4) et la composition selon l'invention (C1) comprennent la même fraction volumique de silice (16% volumique) et le même pourcentage massique d'agent de couplage par rapport à la silice (10%) à l'exception de la composition T3 qui ne comprend pas d'agent de couplage. La composition T3 a une fraction volumique de silice d'environ 16% volumique. Ces compositions peuvent donc être comparées entre elles.

**Tableau 1 :**

| **Composition** | **T1** | **T2** | **T3** | **T4** | **C1** |
|---|---|---|---|---|---|
| Elastomère (1) | 100 | 100 | (-) | (-) | (-) |
| Copolymère A1 (2) | (-) | (-) | 100 | 100 | 100 |
| Silice (3) | 45 | 45 | 45 | 45 | 43,5 |
| Agent de couplage (4) | 4,5 | 4,5 | (-) | 4,5 | (-) |
| Agent de couplage (5) | (-) | (-) | (-) | (-) | 4,35 |
| Système de réticulation (6) | 1,5 | (-) | (-) | (-) | (-) |
| Système de réticulation (7) | (-) | 1,5 | 1,5 | 1,5 | 1,5 |

| | | | | | |
|---|---|---|---|---|---|
| (1) Elastomère styrène-butadiène SBR comprenant 27% de styrène et dans la partie polybutadiène 24% de motifs -1,2 (vinyle), 28% de motifs -1,4 cis et 48% de motifs -1,4 trans ; sa température de transition vitreuse Tg, mesurée par DSC (Differential Scanning Calorimetry) selon la norme ASTM D3418 de 1999 est égale à - 48°C ; (2) Copolymère A1 : Copolymère éthylène/acétate de vinyle (EVA) commercialisé par Arkema sous la référence Evatane 42-60. Le copolymère A1 a un pourcentage molaire de monomère d'éthylène (E) égal à 81% et un pourcentage molaire de monomère d'acétate de vinyle (VA) égal à 19%. Il présente un MFI à 190°C allant de 65 à 85 g/10 mn (MFI = Melt Flow Index et mesuré selon la norme ISO 1133 de 2011) et une température de fusion Tf, mesurée selon la norme ISO 11357 de 2013 égale à 48°C ; (3) Silice « 160 MP » commercialisée par Solvay et dont la surface spécifique BET mesurée la méthode décrite au paragraphe I-2) est de 160 m² /g ; (4) Agent de couplage : tétrasulfure de bis(3-triéthoxysilpropyl) (TESPT) commercialisé par Evonik sous la référence « SI69» ; (5) Agent de couplage : copolymère B1 commercialisé par Arkema sous la référence Lotader AX8900. Le copolymère B1 a un pourcentage molaire de monomère d'éthylène (E), de monomère d'acrylate de méthyle (MA) et de monomère de méthacrylate de glycidyle (GMA) respectivement égaux à 88 % ; 10 % et 2% ; (6) Système de vulcanisation au soufre comprenant 1,5 pce de soufre et 1,5 pce d'accélérateur N-cyclohexyl-2-benzothiazyl-sulfénamide (CBS). L'accélérateur est commercialisé sous le nom de « Santocure CBS » par Flexys ; (7) Système de réticulation : peroxyde de dicumyle (DICUP) commercialisé par Sigma Aldrich. | | | | | |

La composition T2 diffère de la composition T1 par la nature de l'agent de réticulation. Le système de réticulation au soufre (vulcanisation) de la composition T1 a été remplacé par une réticulation aux peroxydes.

La composition T3 diffère de la composition T2 par le fait qu'elle ne comprend pas d'agent de couplage. En outre, la nature chimique de l'élastomère est différente. Le copolymère styrène-butadiène (SBR) de la composition T2 a été remplacé par un copolymère à base d'éthylène et d'acétate de vinyle (EVA) (copolymère A1).

La composition T4 diffère de la composition de la composition T3 par la présence d'un agent de couplage habituellement utilisé pour les compositions de caoutchouc. Il s'agit d'un organosilane polysulfure.

La composition selon l'invention (C1) diffère de la composition T4 par la nature de l'agent de couplage. L'agent de couplage habituellement utilisé dans les compositions de caoutchouc, destinées notamment aux pneumatiques a été remplacé par un copolymère à base d'au moins un monomère d'alpha-oléfine et d'au moins un monomère fonctionnel Y (copolymère B1).

Les propriétés des compositions obtenues après cuisson (environ 20 min à 170°C) sont présentées dans le tableau 2 qui suit.

**Tableau 2**

| **Composition N°** | **T1** | **T2** | **T3** | **T4** | **C1** |
|---|---|---|---|---|---|
| MA50 (à 23°C)/MA50 (à 100°C) | 1,0 | 0,9 | 2,1 | 9,7 | 2,0 |
| MA100 (à 23°C)/MA100 (à 100°C) | 1,1 | 1,0 | 1,9 | 9,9 | 1,9 |
| MA300 (à 23°C)/MA100 (à 23°C) | 4,3 | NC | 2,2 | 2,5 | 3,0 |
| MA300 (à 100°C)/MA100 (à 100 °C) | 4,2 | NC | 2,8 | 1,5 | 3,6 |
| Contrainte nominale à la rupture en MPa (à 23°C) | 21,4 | 12,3 | 20,8 | 10,0 | 24,2 |
| MA300 en MPa (à 23°C) | 9,7 | NC | 7,2 | 6,7 | 10,1 |

| | | | | | |
|---|---|---|---|---|---|
| NC : non communiqué car il n'a pas été possible d'effectuer les mesures. | | | | | |

Par rapport à la composition T1, la composition T2 a une rigidité trop forte et se casse avant même que ne soit effectuée la mesure du module MA 300. Cette composition n'est pas acceptable pour un usage dans un pneumatique.

En remplaçant l'élastomère SBR par un copolymère EVA et en supprimant l'agent de couplage, on obtient la composition témoin T3 qui, par rapport à la composition témoin T2, présente une évolution de la rigidité en température moins bonne que la composition témoin T2 mais cependant acceptable (conditions (a) et (b) respectées). La contrainte à la rupture de la composition T3 a été améliorée par rapport à celle de la composition T2 et est à un niveau acceptable pour l'utilisation considérée (condition (e) respectée). Le renforcement à 23°C et à 100°C est nettement amélioré par rapport à celui de la composition témoin T2 ; toutefois le niveau recherché n'est pas atteint (conditions (c) et (d) non respectées). Il en est de même pour la rigidité (condition (f) non respectée). Cette composition témoin T3 ne présente pas l'ensemble des propriétés recherchées.

Un agent de couplage habituellement utilisé dans les compositions de caoutchouc, destinées aux pneumatiques, tel que l'organosilane tétrasulfure de bis(3-triéthoxysilylpropyl), a été ajouté dans la composition témoin T3 (on obtient la composition témoin T4). Comme attendu, les propriétés de renforcement à 23°C (condition (c)) de la composition témoin T4 ont été améliorées par rapport à celle de la composition témoin T3. Toutefois, toutes les autres propriétés ont été dégradées et cette composition témoin T4 ne peut pas convenir à un usage pneumatique.

De manière surprenante en remplaçant l'agent de couplage l'organosilane tétrasulfure par un copolymère à base d'au moins un monomère d'alpha-oléfine et d'au moins un monomère fonctionnel Y (copolymère B1), on constate que la composition C1 selon l'invention présente l'ensemble des propriétés recherchées. En effet, la composition C1 selon l'invention présente une rigidité qui n'évolue pas ou peu en fonction de la température (conditions (a) et (b) respectées), de bonnes propriétés de renforcement à 23°C et 100°C (conditions (c) et (d) respectées), une bonne contrainte à la rupture et une bonne rigidité (conditions (e) et (f) respectées respectivement). Les propriétés de contrainte à la rupture et de rigidité de la composition C1 selon l'invention sont même supérieures à celles de la composition témoin T1.

### III-3) Essai B:

Les exemples présentés dans le tableau 3 ont pour objet de montrer les propriétés de caoutchouterie des compositions conformes à l'invention C1 à C3 en fonction du taux d'agent de couplage spécifique utilisé. Les résultats des propriétés mesurées après cuisson sont présentés au tableau 4 et sont comparés aux résultats de la composition témoin T3 précédemment décrite.

Les taux des différents constituants des compositions C1 à C3 et T3 présentés dans le tableau 3 sont exprimés en pce. Toutes les compositions ont la même fraction volumique de silice (16%). Seul, le taux d'agent de couplage varie.

**Tableau 3**

| **Composition** | **T3** | **C2** | **C1** | **C3** |
|---|---|---|---|---|
| Copolymère A1 (1) | 100 | 100 | 100 | 100 |
| Silice (2) | 45 | 43 | 43,5 | 46 |
| Agent de couplage (3) | (-) | 2,15 | 4,35 | 9,2 |
| Système de réticulation (4) | 1,5 | 1,5 | 1,5 | 1,5 |
| Pourcentage massique d'agent de couplage par rapport à la masse de silice | 0 | 5 | 10 | 20 |

| | | | | |
|---|---|---|---|---|
| (1) Copolymère A1 : copolymère éthylène/acétate de vinyle (EVA) commercialisé par Arkema sous la référence Evatane 42-60. Le copolymère A1 a un pourcentage molaire de monomère d'éthylène (E) égal à 81% et un pourcentage molaire de monomère d'acétate de vinyle (VA) égal à 19%. Il présente un MFI à 190°C allant de 65 à 85 g/10 mn (MFI = Melt Flow Index et mesuré selon la norme ISO 1133 de 2011) et une température de fusion Tf, mesurée selon la norme ISO 11357 de 2013, égale à 48°C ; (2) Silice « 160 MP » commercialisée par Solvay et dont la surface spécifique BET mesurée la méthode décrite au paragraphe I-2) est de 160 m²/g. (3) Agent de couplage : Copolymère B1 commercialisé par Arkema sous la référence Lotader AX8900. Le copolymère B1 a un pourcentage molaire de monomère d'éthylène (E), de monomère d'acrylate de méthyle (MA) et de monomère de méthacrylate de glycidyle (GMA) respectivement égaux à 88 % ; 10 % et 2%; (4) Système de réticulation : peroxyde de dicumyle (DICUP) commercialisé Sigma Aldrich. | | | | |

Les propriétés obtenues après cuisson (environ 20 min à 170°C) des compositions sont présentées dans le tableau 4 qui suit.

**Tableau 4**

| **Composition** N° | **T3** | **C2** | **C1** | **C3** |
|---|---|---|---|---|
| MA50 (à 23°C)/MA50 (à 100°C) | 2,1 | 2,0 | 2,0 | 2,0 |
| MA100 (à 23°C)/MA100 (à 100°C) | 1,9 | 1,9 | 1,9 | 2,0 |
| MA300 (à 23°C)/MA100 (à 23°C) | 2,2 | 3,0 | 3,0 | 3,1 |
| MA300 (à 100°C)/MA100 (à 100 °C) | 2,8 | 3,7 | 3,6 | 4,0 |
| Contrainte nominale à la rupture en MPa (à 23°C) | 20,8 | 24,3 | 24,2 | 23,8 |
| MA300 en MPa (à 23°C) | 7,2 | 10,5 | 10,1 | 12,4 |

La composition C1 de cet essai est identique à la composition C1 de l'essai A. Les compositions C2 et C3 selon l'invention représentent un autre mode de réalisation de l'invention dans laquelle le taux d'agent de couplage (copolymère B1) a été modifié. Ce taux a été progressivement augmenté de C2 à C1 puis à C1 à C3.

Le tableau 4 montre les propriétés des compositions C1 à C3 selon l'invention par rapport à une composition T3 témoin qui ne comprend aucun agent de couplage.

On constate que les trois compositions selon l'invention C1 à C3 présentent une rigidité qui n'évolue pas ou peu par rapport à la température, tout comme la composition témoin T3. Toutefois, les compositions C1 à C3 selon l'invention présentent de meilleures propriétés de renforcement à 23°C et à 100°C, et de manière surprenante, une meilleure contrainte à la rupture et une meilleure rigidité par rapport à celles de la composition témoin T3, et ce quel que soit le taux d'agent de couplage copolymère B1 utilisé.

### III-4) Essai C:

Les exemples présentés dans le tableau 5 ont pour objet de montrer les propriétés de caoutchouterie des compositions conformes à l'invention C1, C4 et C5 qui comprennent des copolymères A différents. Les résultats des propriétés mesurées après cuisson sont présentés au tableau 6 et sont comparés aux résultats de la composition témoin T1 précédemment décrite.

Les taux des différents constituants des compositions C1, C4 et C5 et T1 présentés dans le tableau 5 sont exprimés en pce. Toutes les compositions ont la même fraction volumique de silice (16%) et le même pourcentage massique d'agent de couplage par rapport à la silice (10%). Ces compositions sont comparables entre elles.

**Tableau 5**

| **Composition** | **T1** | **C1** | **C4** | **C5** |
|---|---|---|---|---|
| Elastomère (1) | 100 | (-) | (-) | (-) |
| Copolymère A1 (2) | (-) | 100 | (-) | (-) |
| Copolymère A2 (3) | (-) | (-) | 100 | (-) |
| Copolymère A3 (4) | (-) | (-) | (-) | 100 |
| Silice (5) | 45 | 43,5 | 43,5 | 43,5 |
| Agent de couplage (6) | 4,5 | (-) | (-) | (-) |
| Agent de couplage (7) | (-) | 4,35 | 4,35 | 4,35 |
| Système de réticulation (8) | 1,5 | (-) | (-) | (-) |
| Système de réticulation (9) | (-) | 1,5 | 1,5 | 1,5 |

| | | | | |
|---|---|---|---|---|
| (1) Copolymère styrène-butadiène SBR comprenant 27% de styrène et dans la partie polybutadiène 24% de motifs -1,2 (vinyle), 28% de motifs -1,4 cis et 48% de motifs -1,4 trans ; sa température de transition vitreuse Tg, mesurée par DSC (Differential Scanning Calorimetry) selon la norme ASTM D3418 de 1999 est égale à -48°C. (2) Copolymère A1 : copolymère éthylène/acétate de vinyle (EVA) commercialisé par Arkema sous la référence Evatane 42-60. Le copolymère A1 a un pourcentage molaire de monomère d'éthylène (E) égal à 81% et un pourcentage molaire de monomère d'acétate de vinyle (VA) égal à 19%. Il présente un MFI à 190°C allant de 65 à 85 g/10 mn (MFI = Melt Flow Index et mesuré selon la norme ISO 1133 de 2011) et une température de fusion Tf, mesurée selon la norme ISO 11357 de 2013, égale à 48°C ; (3) Copolymère A2 : copolymère éthylène/acétate de vinyle (EVA) commercialisé par Arlanxeo sous la référence LEVAPREN 500. Le copolymère A2 a un pourcentage molaire de monomère d'éthylène (E) égal à 75% et un pourcentage molaire de monomère d'acétate de vinyle (VA) égal à 25%. Il présente un indice de viscosité Mooney égale à 27±4 UM (indice Mooney 1+4 à 100°C mesuré selon la norme ASTM D1646 (UM = unité Mooney, 1UM=0,83 Newton.mètre) ; (4) Copolymère A3 : copolymère éthylène/acétate de vinyle (EVA) commercialisé par Arlanxeo sous la référence LEVAPREN 700. le copolymère A3 a un pourcentage molaire de monomère d'éthylène (E) égal à 30% et un pourcentage molaire de monomère d'acétate de vinyle (VA) égal à 70%. Il présente un indice de viscosité Mooney égale à 27±4 UM (indice Mooney 1+4 à 100°C mesuré selon la norme ASTM D1646 ; (5) Silice « 160 MP » commercialisée par Solvay et dont la surface spécifique BET mesurée la méthode décrite au paragraphe I-2) est de 160 m² /g ; (6) Agent de couplage : tétrasulfure de bis(3-triéthoxysilylpropyl) (TESPT) commercialisé par Evonik sous la référence « SI69» ; (7) Agent de couplage : Copolymère B1 Lotader AX8900 commercialisé par Arkema (pourcentage massique des monomères d'éthylène (E), d'acrylate de méthyle (MA) et de méthacrylate de glycidyle (GMA) (E/MA/GMA 68/24/8 respectivement) ; (8) Système de vulcanisation au soufre comprenant 1,5 pce de soufre et 1,5 pce d'accélérateur N-cyclohexyl-2-benzothiazyl-sulfénamide (CBS). L'accélérateur est commercialisé sous le nom de « Santocure CBS » par Flexys ; (9) Système de réticulation : peroxyde de dicumyle (DICUP) commercialisé Sigma Aldrich. | | | | |

Les propriétés obtenues après cuisson (environ 20 min à 170°C) des compositions sont présentées dans le tableau 6 qui suit.

**Tableau 6**

| **Composition N°** | **T1** | **C1** | **C4** | **C5** |
|---|---|---|---|---|
| MA50 (à 23°C)/MA50 (à 100°C) | 1,0 | 2,0 | 1,9 | 2,0 |
| MA100 (à 23°C)/MA100 (à 100°C) | 1,1 | 1,9 | 1,8 | 1,8 |
| MA300 (à 23°C)/MA100 (à 23°C) | 4,3 | 3,0 | 3,7 | 3,9 |
| MA300 (à 100°C)/MA100 (à 100 °C) | 4,2 | 3,6 | 4,6 | 4,9 |
| Contrainte nominale à la rupture en MPa (à 23°C) | 21,4 | 24,2 | 24,9 | 21,6 |
| MA300 en MPa (à 23°C) | 9,7 | 10,1 | 9,9 | 9,4 |

Les compositions T1 et C1 de cet essai sont identiques aux compositions T1 et C1 de l'essai A. Les compositions C4 et C5 représentent un autre mode de réalisation de l'invention dans laquelle la nature du copolymère A est différente.

Le tableau 6 montre que les propriétés des compositions C4 et C5 selon l'invention sont comparables aux propriétés de la composition C1 selon l'invention. L'ensemble des compositions selon l'invention C1, C4 et C5 présente les propriétés recherchées en terme d'évolution de la rigidité en fonction de la température, de renforcement à 23°C et à 100°C, de contrainte à la rupture et de rigidité. Certaines de ces propriétés sont même améliorées par rapport à celles de la composition témoin T1 classiquement utilisée pour la fabrication de bande de roulement, destinée à équiper des pneumatiques (composition T1).

### III-5) Essai D:

Les exemples présentés dans le tableau 7 ont pour objet de montrer les propriétés de caoutchouterie des compositions conformes à l'invention C3, C6 et C7 en fonction des différents agents de couplage (copolymères B) utilisés. Les résultats des propriétés mesurées après cuisson sont présentés au tableau 8 et sont comparés aux résultats de la composition témoin T3 précédemment décrite.

Les taux des différents constituants des compositions C3, C6 et T3 présentés dans le tableau 7 sont exprimés en pce. Toutes les compositions ont la même fraction volumique de silice (16%) et le même pourcentage massique d'agent de couplage par rapport à la silice (20%) à l'exception de la composition T3 qui ne comprend pas d'agent de couplage. Ces compositions sont comparables entre elles.

**Tableau 7**

| **Composition** | **T3** | **C3** | **C6** | **C7** |
|---|---|---|---|---|
| Copolymère A1 (1) | 100 | 100 | 100 | 100 |
| Silice (2) | 45 | 46 | 46 | 46 |
| Agent de couplage (3) | (-) | 9,2 | (-) | (-) |
| Agent de couplage (4) | (-) | (-) | 9,2 | (-) |
| Agent de couplage (5) | (-) | (-) | (-) | 9,2 |
| Système de réticulation (6) | 1,5 | 1,5 | 1,5 | 1,5 |

| | | | | |
|---|---|---|---|---|
| (1) Copolymère A1 : copolymère éthylène/acétate de vinyle (EVA) commercialisé par Arkema sous la référence Evatane 42-60. Le copolymère A1 a un pourcentage molaire de monomère d'éthylène (E) égal à 81% et un pourcentage molaire de monomère d'acétate de vinyle (VA) égal à 19%. Il présente un MFI à 190°C allant de 65 à 85 g/10 mn (MFI = Melt Flow Index et mesuré selon la norme ISO 1133 de 2011) et une température de fusion Tf, mesurée selon la norme ISO 11357 de 2013, égale à 48°C ; (2) Silice « 160 MP » commercialisée par la société Solvay et dont la surface spécifique BET mesurée la méthode décrite au paragraphe I-2) est de 160 m² /g ; (3) Agent de couplage : Copolymère B1 commercialisé par Arkema sous la référence Lotader AX8900. Ce copolymère B1 a un pourcentage molaire de monomère d'éthylène (E), de monomère d'acrylate de méthyle (MA) et de monomère de méthacrylate de glycidyle (GMA) respectivement égaux à 88 % ; 10 % et 2% ; (4) Agent de couplage : Copolymère B2 commercialisé par Arkema sous la référence Lotader AX8930. Ce copolymère B2 a un pourcentage molaire de monomère d'éthylène (E), de monomère d'acrylate de méthyle (MA) et de monomère de méthacrylate de glycidyle (GMA) respectivement égaux à 89 % ; 10 % et 1% ; (5) Agent de couplage : Copolymère B3 copolymère EVA-GMA synthétisée par la société Arkema selon le procédé décrit dans EP174244A1 ou EP177378A1). Ce copolymère B3 a un pourcentage molaire de monomère d'éthylène (E), de monomère d'acétate de vinyle (VA) et de monomère de méthacrylate de glycidyle (GMA) respectivement égaux à 80 % ; 18 % et 2% ; (6) Système de réticulation : peroxyde de dicumyle (DICUP) commercialisé par Sigma Aldrich. | | | | |

Les propriétés obtenues après cuisson (environ 20 min à 170°C) des compositions sont présentées dans le tableau 8 qui suit.

**Tableau 8**

| **Composition N°** | **T3** | **C3** | **C6** | **C7** |
|---|---|---|---|---|
| MA50 (à 23°C)/MA50 (à 100°C) | 2,1 | 2,0 | 2,0 | 1,9 |
| MA100 (à 23°C)/MA100 (à 100°C) | 1,9 | 2,0 | 2,0 | 1,8 |
| MA300 (à 23°C)/MA100 (à 23°C) | 2,2 | 3,1 | 3,0 | 3,1 |
| MA300 (à 100°C)/MA100 (à 100 °C) | 2,8 | 4,0 | 3,6 | 3,7 |
| Contrainte nominale à la rupture en MPa (à 23°C) | 20,8 | 23,8 | 25,0 | 29,1 |
| MA300 en MPa (à 23°C) | 7,2 | 12,4 | 14,8 | 11,9 |

Les compositions T3 et C3 de cet essai sont identiques aux compositions T3 et C3 de l'essai B. Les compositions C6 et C7 représentent d'autres modes de réalisation de l'invention dans lesquelles la nature de l'agent de couplage (copolymère B) est différente de celle des compositions précédentes.

Le tableau 8 montre que les propriétés des compositions C6 et C7 selon l'invention sont comparables aux propriétés de la composition C3 selon l'invention. L'ensemble des compositions selon l'invention C3, C6 et C7 présente les propriétés recherchées en termes d'évolution de la rigidité en fonction de la température, de renforcement à 23°C et à 100°C, de contrainte à la rupture et de rigidité.

## Revendications

1. Composition de caoutchouc à base d'au moins :
- un copolymère A avec un taux supérieur ou égal à 50 pce, ledit copolymère A étant un copolymère à base d'au moins un monomère d'éthylène et d'au moins un monomère d'acétate de vinyle,
- une charge renforçante inorganique qui se **caractérise par** la présence de groupes hydroxyle à sa surface, le taux de charge renforçante inorganique étant supérieur ou égal à 20 pce,
- à titre d'agent de couplage entre ledit copolymère A et ladite charge renforçante inorganique un copolymère B différent dudit copolymère A, ledit copolymère B étant un copolymère à base d'au moins un monomère d'alpha-oléfine et d'au moins un monomère fonctionnel Y,
le monomère fonctionnel Y étant choisi parmi les monomères porteurs d'une fonction époxyde et les monomères porteurs d'une fonction acide carboxylique, le pourcentage molaire dudit monomère fonctionnel Y dans ledit copolymère B est supérieur ou égal à 0,5%, et
- un système de réticulation aux peroxydes.

2. Composition selon la revendication 1, dans laquelle le taux molaire de monomère d'éthylène dans le copolymère A est supérieur ou égal à 51%, de préférence supérieur ou égal à 55%, de préférence va de 57% à 90%.

3. Composition selon l'une quelconque des revendications 1 à 2, dans laquelle le pourcentage molaire dudit monomère fonctionnel Y dans ledit copolymère B est supérieur ou égal à 0,7%, de préférence va de 0,7% à 10%.

4. Composition selon l'une quelconque des revendications -4précédentes, dans laquelle le monomère fonctionnel Y du copolymère B est un monomère porteur d'une fonction époxyde, ledit monomère fonctionnel Y étant choisi parmi les esters de glycidyle aliphatiques, les éthers de glycidyle aliphatiques, les esters de glycidyle alicycliques et les éthers de glycidyle alicycliques.

5. Composition selon la revendication 4, dans laquelle le monomère fonctionnel Y du copolymère B est choisi parmi le méthacrylate de glycidyle et l'acrylate de glycidyle.

6. Composition selon l'une quelconque des revendications 1 à 5, dans laquelle le monomère d'alpha-oléfine du copolymère B est l'éthylène.

7. Composition selon l'une quelconque des revendications 1 à 6, comprenant en outre un polymère C, différent du copolymère A et du copolymère B.

8. Composition selon la revendication 7, dans laquelle le polymère C est un élastomère diénique ayant un taux molaire de motif diénique inférieur à 15 %.

9. Composition selon l'une quelconque des revendications 1 à 8, dans laquelle le taux de copolymère B va de 1 à 25 pce.

10. Composition selon l'une quelconque des revendications 1 à 9, dans laquelle la charge renforçante inorganique comprend de la silice.

11. Article semi-fini pour pneumatique comprenant au moins une composition conforme à l'une quelconque des revendications 1 à 10.

12. Pneumatique comprenant au moins une composition conforme à l'une quelconque des revendications 1 à 10 ou comprenant au moins un article semi-fini pour pneumatique conforme à la revendication 11.

13. Utilisation de la composition conforme à l'une quelconque des revendications 1 à 10 dans des mousses ou articles en mousse, ou comme additifs chocs de matériaux thermoplastiques, comme additifs pour bitume, ou encore dans des colles structurales thermo-fusibles ou dans le domaine de la câblerie.

## Patentansprüche

1. Kautschukzusammensetzung auf Basis von mindestens:
- einem Copolymer A mit einem Gehalt größer oder gleich 50 phe, wobei es sich bei dem Copolymer A um ein Copolymer auf Basis von mindestens einem Ethylen-Monomer und mindestens einem Vinylacetat-Monomer handelt,
- einem verstärkenden anorganischen Füllstoff, der durch das Vorliegen von Hydroxylgruppen an seiner Oberfläche gekennzeichnet ist, wobei der Gehalt an verstärkendem anorganischem Füllstoff größer oder gleich 20 phe ist,
- als Mittel zur Kupplung zwischen dem Copolymer A und dem verstärkenden anorganischen Füllstoff einem Copolymer B, das von dem Copolymer A verschieden ist, wobei es sich bei dem Copolymer B um ein Copolymer auf Basis von mindestens einem alpha-Olefin-Monomer und mindestens einem funktionellen Monomer Y handelt,
wobei das funktionelle Monomer Y aus Monomeren, die eine Epoxidfunktion tragen, und Monomeren, die eine Carbonsäurefunktion tragen, ausgewählt ist, wobei der Molprozentanteil des funktionellen Monomers Y in dem Copolymer B größer oder gleich 0,5 % ist, und
- einem Peroxid-Vernetzungssystem.

2. Zusammensetzung nach Anspruch 1, wobei der molare Gehalt an Ethylen-Monomer in dem Copolymer A größer oder gleich 51 % ist, vorzugsweise größer oder gleich 55 % ist und vorzugsweise 57 % bis 90 % beträgt.

3. Zusammensetzung nach einem der Ansprüche 1 bis 2, wobei der Molprozentanteil des funktionellen Monomers Y in dem Copolymer B größer oder gleich 0,7 % ist und vorzugsweise 0,7 % bis 10 % beträgt.

4. Zusammensetzung nach einem der vorhergehenden Ansprüche, wobei es sich bei dem funktionellen Monomer Y des Copolymers B um ein Monomer, das eine Epoxidfunktion trägt, handelt, wobei das funktionelle Monomer Y aus aliphatischen Glycidylestern, aliphatischen Glycidylethern, alicyclischen Glycidylestern und alicyclischen Glycidylethern ausgewählt ist.

5. Zusammensetzung nach Anspruch 4, wobei das funktionelle Monomer Y des Copolymers B aus Glycidylmethacrylat und Glycidylacrylat ausgewählt ist.

6. Zusammensetzung nach einem der Ansprüche 1 bis 5, wobei es sich bei dem alpha-Olefin-Monomer des Copolymers B um Ethylen handelt.

7. Zusammensetzung nach einem der Ansprüche 1 bis 6, die außerdem ein Polymer C, das von dem Copolymer A und dem Copolymer B verschieden ist, umfasst.

8. Zusammensetzung nach Anspruch 7, wobei es sich bei dem Polymer C um ein Dienelastomer mit einem molaren Gehalt an Dieneinheiten von weniger als 15 % handelt.

9. Zusammensetzung nach einem der Ansprüche 1 bis 8, wobei der Gehalt des Copolymers B im Bereich von 1 bis 25 phe liegt.

10. Zusammensetzung nach einem der Ansprüche 1 bis 9, wobei der verstärkende anorganische Füllstoff Kieselsäure umfasst.

11. Halbzeug für Reifen, umfassend mindestens eine Zusammensetzung gemäß einem der Ansprüche 1 bis 10.

12. Reifen, umfassend mindestens eine Zusammensetzung gemäß einem der Ansprüche 1 bis 10 oder mindestens ein Halbzeug für Reifen gemäß Anspruch 11.

13. Verwendung der Zusammensetzung gemäß einem der Ansprüche 1 bis 10 in Schaumstoffen oder Schaumstoffartikeln oder als Schlagzähigkeitadditive in thermoplastischen Materialien, als Additive für Bitumen oder auch in Strukturschmelzklebstoffen oder auf dem Gebiet der Kabelherstellung.

## Claims

1. Rubber composition based on at least:
- a copolymer A with a content of greater than or equal to 50 phr, said copolymer A being a copolymer based on at least one ethylene monomer and on at least one vinyl acetate monomer,
- a reinforcing inorganic filler **characterized by** the presence of hydroxyl groups at its surface, the content of reinforcing inorganic filler is greater than or equal to 20 phr,
- as agent for coupling between said copolymer A and said reinforcing inorganic filler, a copolymer B different from said copolymer A, said copolymer B being a copolymer based on at least one alpha-olefin monomer and on at least one functional monomer Y, the functional monomer Y of the copolymer B being chosen from monomers bearing an epoxide function and monomers bearing a carboxylic acid function, the molar percentage of said functional monomer Y in said copolymer B is greater than or equal to 0.5%, and
- a peroxide crosslinking system.

2. Composition according to Claim 1, wherein the molar content of ethylene monomer in the copolymer A is greater than or equal to 51%, preferably greater than or equal to 55%, preferably ranges from 57% to 90%.

3. Composition according to any one of Claims 1 to 2, wherein the molar percentage of said functional monomer Y in said copolymer B is greater than or equal to 0.7%, preferably ranges from 0.7% to 10%.

4. Composition according to any one of the preceding claims, wherein the functional monomer Y of the copolymer B is a monomer bearing an epoxide function, said functional monomer Y being chosen from aliphatic glycidyl esters, aliphatic glycidyl ethers, alicyclic glycidyl esters and alicyclic glycidyl ethers.

5. Composition according to Claim 4, wherein the functional monomer Y of the copolymer B is chosen from glycidyl methacrylate and glycidyl acrylate.

6. Composition according to any one of Claims 1 to 5, wherein the alpha-olefin monomer of the copolymer B is ethylene.

7. Composition according to any one of Claims 1 to 6, also comprising a polymer C, different from the copolymer A and the copolymer B.

8. Composition according to Claim 7, wherein the polymer C is a diene elastomer having a molar content of diene units of less than 15%.

9. Composition according to any one of Claims 1 to 8, wherein the content of copolymer B ranges from 1 to 25 phr.

10. Composition according to any one of Claims 1 to 9, wherein the reinforcing inorganic filler comprises silica.

11. Semi-finished article for tyre comprising at least one composition in accordance with any one of Claims 1 to 10.

12. Tyre comprising at least one composition in accordance with any one of Claims 1 to 10 or comprising at least one semi-finished article for tyre in accordance with Claim 11.

13. Use of the composition in accordance with any one of Claims 1 to 10 in foams or foam articles, or as impact additives in thermoplastic materials, or as additives for bitumen, or else in structural hot-melt adhesives or in the field of cable making.
